# EUROPÄISCHE PATENTSCHRIFT

(11) **EP 0 591 796 B1**
(45) Veröffentlichungstag und Bekanntmachung des Hinweises auf die Patenterteilung: **20.01.1999**
(21) Anmeldenummer: 93115508.9
(22) Anmeldetag: 25.09.1993
(51) Int. Cl.: H01H 13/06, H01H 9/04, H01H 13/10, H02B 1/04

(54) **Schalteinrichtung**
Switching device
Dispositif de commutation

(30) Priorität: 05.10.1992 DE 4233447
(43) Veröffentlichungstag der Anmeldung: 13.04.1994
(60) Teilanmeldung: 96118557.6
(73) Patentinhaber: Barlian, Reinhold, D-97980 Bad Mergentheim (DE)
(72) Erfinder: Barlian, Reinhold, D-97980 Bad Mergentheim (DE); Lux, Karl-Heinz, D-97990 Weikersheim (DE); Mezger, Lothar, D-97980 Bad Mergentheim (DE); Fischle, Martin, D-97980 Bad Mergentheim (DE)

(56) Entgegenhaltungen:
- EP-A- 0 374 545
- DE-A- 2 856 686
- DE-A- 3 139 701
- DE-A- 3 511 898
- DE-A- 3 733 800
- DE-B- 1 129 587
- DE-B- 2 316 872
- DE-C- 3 543 885
- DE-U- 7 425 933
- DE-U- 7 711 501
- DE-U- 7 713 585
- DE-U- 8 208 592
- DE-U- 8 908 758
- DE-U- 8 908 871
- US-A- 3 624 332

## Beschreibung

Die Erfindung betrifft eine Schalteinrichtung mit den Merkmalen des Oberbegriffs des Anspruchs 1.

Bei einer aus der DE-U-8208592 bekannten Schalteinrichtung dieser Art weist das Schaltgehäuse am unteren Rand eine etwa messerschneidenförmige Dichtkante auf, die an der Innenfläche des Außengehäuses anliegt. Die Dichtkante soll verhindern, daß das Gießharz beim Vergießen des Außengehäuses zum Schaltfunktionsteil vordringt. Da die dünne Dichtkante vor oder während der Montage des Schaltgehäuses relativ leicht beschädigt werden kann, besteht die Gefahr, daß das Gießharz beim Vergießen des Gehäuses nicht zurückgehalten werden kann, sondern zu weit vordringt, so daß die Schaltfunktion beeinträchtigt wird.

Die DE-U-8908758 offenbart ein Haushaltsgerät, wie Kaffeemaschine oder dergleichen. In der Wand des Gerätes befindet sich ein Drucktastenschalter, der mittels einer Rastverbindung befestigt ist, indem Vorsprünge in Ausnehmungen eingreifen, allerdings nicht im Bereich einer mit Gießharz zu vergießenden Bunddichtfläche.

Die Aufgabe der Erfindung besteht darin, eine Schalteinrichtung mit den Merkmalen des Oberbegriffs des Anspruchs 1 dahingehend weiterzubilden, daß die vorbeschriebenen Nachteile vermieden werden und mit einfachen Mitteln eine kleine Kompaktbaueinheit mit hoher Funktionssicherheit erzielt wird.

Diese Aufgabe wird erfindungsgemäß durch die kennzeichnenden Merkmale des Anspruchs 1 gelöst.

Bevorzugte Ausgestaltungen und Weiterbildungen der Erindung sind durch die Merkmale der Unteransprüche gekennzeichnet.

Weitere Vorteile und wesentliche Einzelheiten der Erfindung sind der nachfolgenden Beschreibung und der Zeichnung zu entnehmen, die in schematischer Darstellung bevorzugte Ausführungsformen als Beispiel zeigt. Es stellen dar:

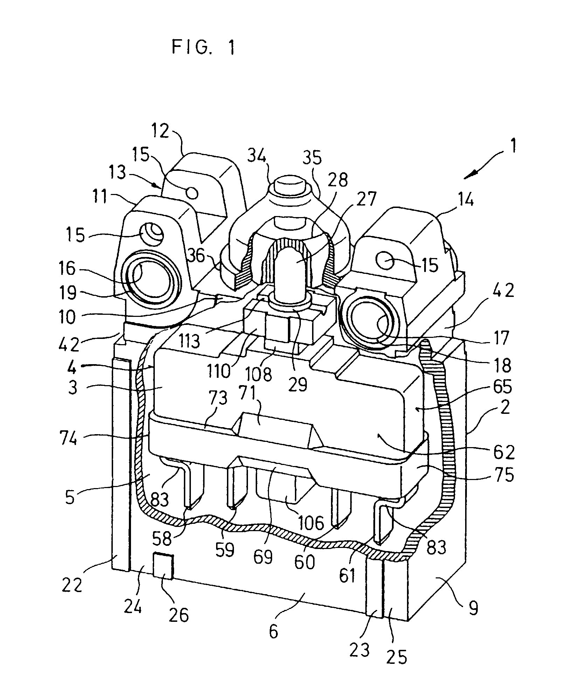

- FIG. 1: eine erfindungsgemäße Schalteinrichtung in einer Gesamtansicht, teilweise geschnitten,

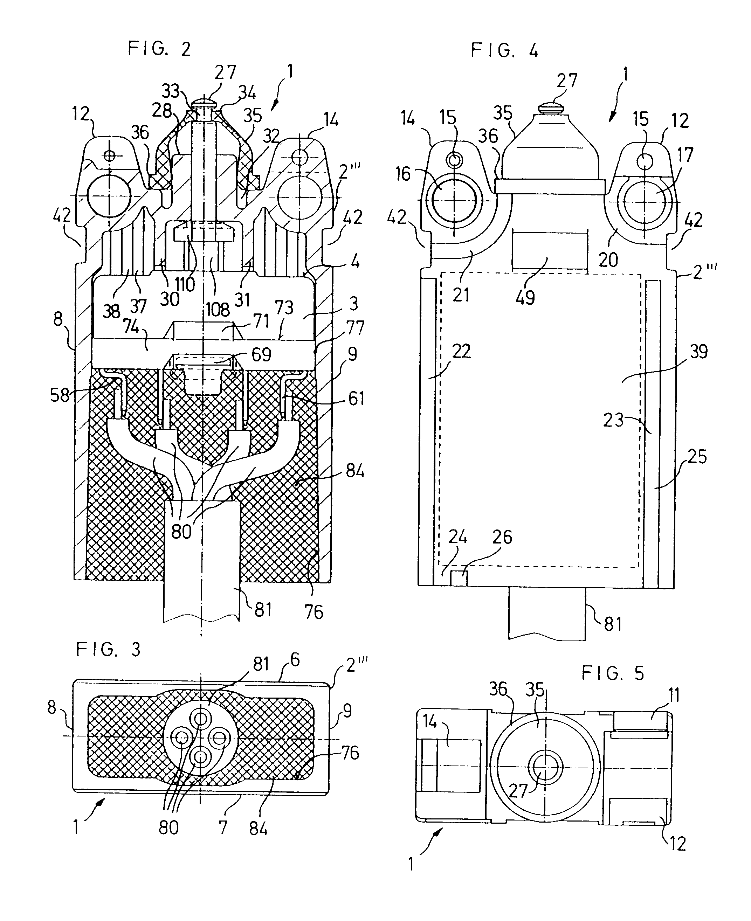

- FIG. 2: die Schalteinrichtung ähnlich der FIG. 1 in einer geschnittenen Breitseitenansicht mit angeschlossener und vergossener Schlauchleitung,
- FIG. 3: die Schalteinrichtung der FIG. 2 in einer Ansicht von unten,
- FIG. 4: die Schalteinrichtung der FIG. 2 in einer geschlossenen Breitseitenansicht,

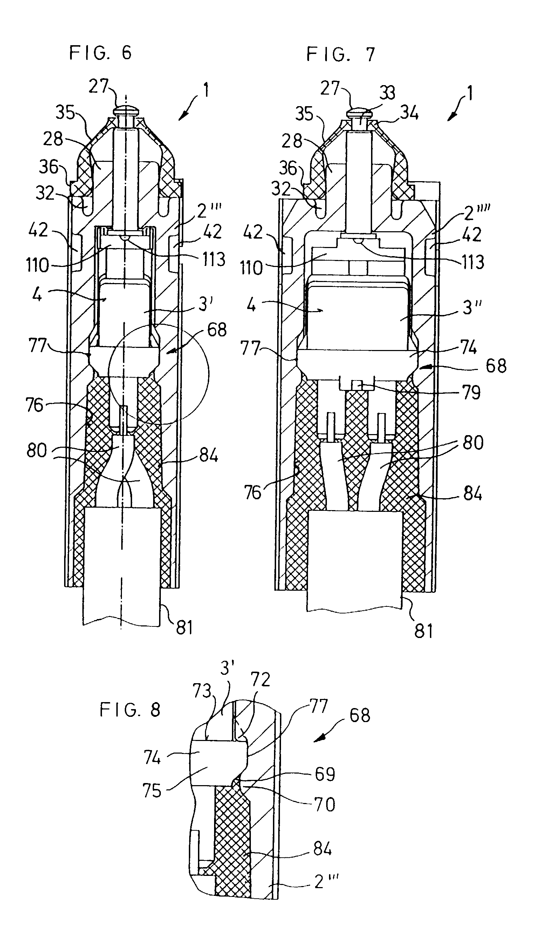

- FIG. 5: die Schalteinrichtung der FIG. 4 in einer Draufsicht,
- FIG. 6: die Schalteinrichtung ähnlich der FIG. 2 in Einzelschalterausbildung in einer geschnittenen Schmalseitenansicht,
- FIG. 7: die Schalteinrichtung ähnlich der FIG. 2 in Doppelschalterausbildung in einer geschnittenen Schmalseitenansicht,
- FIG. 8: einen Teil der in der FIG. 6 eingekreisten Rastverbindung in vergrößerter Darstellung,

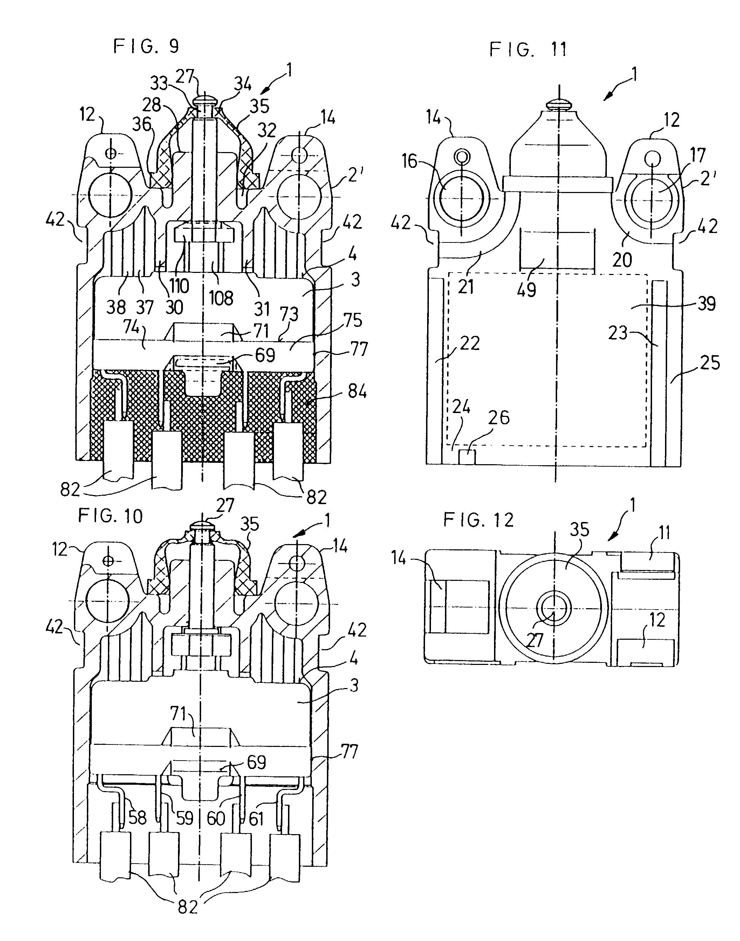

- FIG. 9: die Schalteinrichtung ähnlich der FIG. 1 in einer geschnittenen Breitseitenansicht mit angeschlossenen und vergossenen Einzeladern,
- FIG. 10: die Schalteinrichtung der FIG. 9, jedoch ohne Verguß und mit heruntergedrücktem Betätigungsstößel,
- FIG. 11: die Schalteinrichtung der FIG. 9 in einer geschlossenen Breitseitenansicht,
- FIG. 12: die Schalteinrichtung der FIG. 11 in einer Draufsicht,

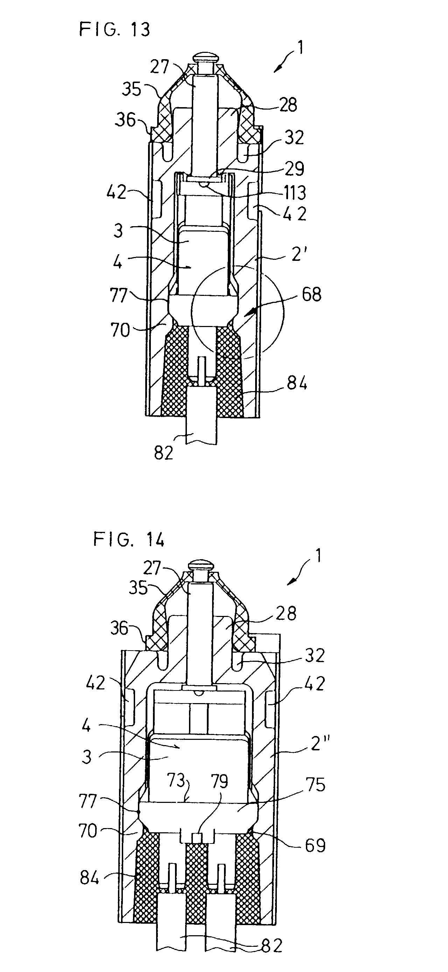

- FIG. 13: die Schalteinrichtung der FIG. 9 mit angeschlossenen und vergossenen Einzeladern in Einzelschalterausbildung in einer geschnittenen Schmalseitenansicht und
- FIG. 14: die Schalteinrichtung der FIG. 9 mit angeschlossenen und vergossenen Einzeladern in Doppelschalterausbildung in einer geschnittenen Schmalseitenansicht.

Die erfindungsgemäße Schalteinrichtung 1 weist ein Außengehäuse 2 und einen Schalter 3 mit einem Schaltgehäuse 4 auf, das in einer Kammer 5 des Außengehäuses 2 gelagert ist.

Das im wesentlichen rechteckförmige Außengehäuse 2 besitzt zwei Breitseitenwände 6, 7 und zwei Schmalseitenwände 8, 9 sowie eine Oberwand 10, die die nach unten hin offene Kammer 5 begrenzen.

Auf der Oberwand 10 können in der Nähe der einen Schmalseitenwand 8 zwei Befestigungshöcker 11,12 angeformt sein, zwischen denen ein Abstand 13 besteht, und in der Nähe der gegenüberliegenden Schmalseitenwand 9 kann ein einzelner Befestigungshöcker 14 vorgesehen sein. An den Befestigungshöckern 11, 12, 14 können Querbohrungen 15 ausgebildet sein.

Unter den beiden Befestigungshöckern 11, 12 kann in einer Bohrung des Außengehäuses 2 in der Nähe der einen Schmalseitenwand 8 eine sich zu dieser parallel erstreckende Metallbuchse 16 gelagert sein. Auf der gegenüberliegenden Gehäuseseite, also parallel zur Schmalseitenwand 9, kann in einer Bohrung unter dem einen Befestigungshöcker 14 eine weitere Metallbuchse 17 gelagert sein. Die beiden Metallbuchsen 16, 17 sind völlig identisch und besitzen an dem einen Ende einen vorzugsweise rohrförmigen Vorsprung 18 und an dem gegenüberliegenden Ende einen vorzugsweise durch eine ringförmige Ausdrehung gebildeten Rücksprung 19. Die Metallbuchsen 16, 17 können in den Bohrungen des Außengehäuses 2 in zueinander entgegengesetzten Richtungen zweckmäßig selbsthaltend gelagert sein.

Außerdem können an den Breitseitenwänden 6, 7 des Außengehäuses 2 bevorzugt unterhalb der Vorsprünge 18 ein vorzugsweise etwa viertelkreisförmiger Teilkreissteg 20 und auf Abstand unterhalb des Rücksprungs 19 der Metallbuchsen 16, 17 ebenfalls ein teilkreisförmiger Stegteil 21 ausgebildet sein. Zudem können an dem Außengehäuse zwei Stege 22, 23 sowie ein Stegteil 26 und Vertiefungen 24, 25 zur Arretierung der anreihbaren Schalteinrichtungen 1 vorgesehen sein.

Im oberen Teil des Außengehäuses 2 kann ein Betätigungsstößel 27 vorgesehen sein, der in einem Zylinder 28 axial verschiebbar gelagert ist und einen Ringbund 29 aufweist, der sich im Innern des Außengehäuses 2 zwischen zwei Gehäusewandteilen 30, 31 an der Unterseite des Zylinders 28 abstützt. Zur Materialeinsparung und formstabilen Oberwandausbildung kann es zweckmäßig sein, an der Oberwand 10 eine den Zylinder 28 umgebende Ringnut 32 vorzusehen. Der Betätigungsstößel 27 kann eine Umfangsnut 33 aufweisen, in die ein Haltebund 34 einer domförmigen gummielastischen Schutzkappe 35 dicht eingreift, die den Betätigungsstößel 27, den Zylinder 28 und die Ringnut 32 überdeckt und mit einem Wulst 36 auf der Oberwand 10 des Außengehäuses 2 dicht aufliegt. Im oberen Bereich des Außengehäuses 2 bzw. der Kammer 5 können Versteifungsrippen 37 mit dazwischenliegenden Rillen 38 ausgebildet sein und mindestens eine der Breitseitenwände 6, 7 kann außen ein Beschriftungsfeld 39 aufweisen, an dem beispielsweise der Firmenname, der Gerätetyp, die Zulassungsnummer sowie technische Daten angebracht werden können. Zur Befestigung der Schalteinrichtung 1 kann an beiden Schmalseitenwänden 8, 9 je eine Schnappausnehmung 42 ausgebildet sein, in die ein Gegenstück einschnappen kann und es kann am Außengehäuse 2 eine Klipsaussparung 49 für die lösbare Befestigung eines Zubehörteils vorgesehen sein.

Der elektrische Schalter 3 kann sowohl als Einzelschalter 3' als auch als Doppelschalter 3" ausgebildet sein, wobei jeder eigentliche Schalter vier Anschlußzungen 58, 59, 60, 61 aufweisen kann, die an der Schalterunterseite aus dem Schaltgehäuse 4 herausgeführt sind und in einer Reihe liegen. Das heißt, daß der Einzelschalter 3' vier in einer Reihe liegende Anschlußzungen 58 bis 61 und der Doppelschalter 3" zwei parallele Reihen mit je vier Anschlußzungen 58 bis 61 aufweist.

Das Schaltgehäuse 4 kann ebenfalls als im wesentlichen rechteckförmiger Körper gestaltet sein und Breitseitenwandungen 62, Schmalseitenwandungen 65 sowie eine Unterwand und eine Dachwand besitzen. Um den Schalter 3 einfach und funktionssicher in dem Außengehäuse 2 exakt positionieren zu können, kann eine Rastverbindung 68 vorgesehen sein, mittels der der Schalter 3 in dem Außengehäuse 2 unverrückbar und genau ausgerichtet in definierter Position festgehalten wird. Die Rastverbindung 68 kann bevorzugt aus einer Rastausnehmung 69 und einem Rastvorsprung 70 bestehen, der in die Rastausnehmung 69 formschlüssig eingreift. Dabei kann es günstig sein, die Rastausnehmung 69 vorzugsweise außen an beiden Breitseitenwandungen 62 und den Rastvorsprung 70 innen vorzugsweise an beiden Breitseitenwänden 6, 7 des Außengehäuses 2 vorzusehen. Es liegt jedoch im Rahmen der Erfindung, beispielsweise die Rastausnehmung 69 innen an den Breitseitenwänden 6,7 des Außengehäuses 2 und den Rastvorsprung 70 außen an den Breitseitenwandungen 62 des Schaltgehäuses 4 auszubilden.

Um den Schalter 3 bei der Montage schonend und verkantungsfrei von unten in die Kammer 5 des Außengehäuses 2 einschieben zu können, kann zweckmäßig eine Einführschräge 71 vorgesehen sein, die vorzugsweise am Schaltgehäuse 4 in einer Ebene über der Rastausnehmung 69 angeordnet sein kann. Dabei kann es auch günstig sein, die Einführschräge 71 in der Kammer 5 vorzugsweise vor oder an dem Rastvorsprung 70 auszubilden.

Damit der Schalter 3 mit Sicherheit nicht zu weit in die Kammer 5 eingeschoben werden kann, kann es günstig sein, einen Anschlag 72 und einen Gegenanschlag 73 vorzusehen. Der Anschlag 72 kann sich an den Seitenwänden, vorzugweise den Breitseitenwänden 6, 7 des Außengehäuses 2 befinden und durch die unteren Enden der hier materialeinheitlich geformten Versteifungsrippen 37 gebildet sein. Das Schaltgehäuse 3 kann einen Bund 74 aufweisen, der im Bereich der Unterwand an den Seitenwandungen 62, 65 vorstehend angeformt sein kann. Die den Anschlußzungen 58 bis 61 abgewandte obere Schmalseite des an den Breitseitenwandungen 62 vorstehenden Bundes 74 kann den Anschlag 72 darstellen, der beim Einschieben des Schalters 3 in das Außengehäuse 2 am Anschlag 72 der Versteifungsrippen 37 zur Anlage gelangt.

Um eine sichere Abdichtung zwischen dem Schaltergehäuse 4 und den Seitenwänden 6 bis 9 des Außengehäuses 2 zu erzielen, kann es vorteilhaft sein, am Schaltgehäuse 4 eine Abdichtfläche 75 vorzusehen, die in bevorzugter Ausführungsform von der Außenfläche des Bundes 74 gebildet sein kann, die im wesentlichen parallel zu den Seitenwandungen 62, 65 liegt. Die Abdichtfläche 75 kann zu den Seitenwänden 6 bis 9 des Außengehäuses 2 hin so ausgelegt sein, daß zwischen den Innenflächen 76 des Außengehäuses 2 und der Abdichtfläche 75 des Schalters 3 lediglich ein schmaler ausgießbarer Spalt 77 besteht.

Zur Erhöhung der Sicherheit gegen Fehlmontage kann es vorteilhaft sein, eine Zwangsführung vorzusehen, die aus einer Führungsnut und einer in diese eingreifenden Führungsnase 79 bestehen kann. Die Führungsnase 79 kann bevorzugt an der Schmalseitenwandung 65 des Schaltgehäuses 4 angeformt sein und zum Beispiel am unteren Rand des Bundes 74 vorstehen. Die Führungsnut kann bevorzugt an der Innenfläche 76 des Außengehäuses 2 an einer der beiden Schmalseitenwände 8, 9 ausgebildet sein und sich in Einschubrichtung, also in Längsrichtung des Außengehäuses 2, erstrecken. Die Führungsnut kann entweder als in die Schmalseitenwand 8, 9 eingebrachte Längsrille ausgeführt sein oder durch zwei vorstehende, auf Abstand parallel verlaufende Führungsstege gebildet sein, wobei die Breite der Führungsnut durch den Abstand zwischen den beiden Führungsstegen gebildet ist.

An den nach unten abstrebenden Anschlußzungen 58 bis 61 des Schalters 3 können wahlweise die elektrischen Leiter 80 einer Schlauchleitung 81 oder elektrische Einzeladern 82 angeschlossen sein. Die beiden äußeren Anschlußzungen 58, 61 können eine treppenstufenförmige Abkröpfung 83 aufweisen. Das die Einzeladern 82 aufnehmende Außengehäuse 2' kann in Längsrichtung kürzer sein als das die Schlauchleitung 81 aufnehmende Außengehäuse 2‴, 2"".

Zur Erzielung einer explosionsgeschützten Ausführung kann es vorteilhaft sein, den dem Betätigungsstößel 27 gegenüberliegenden unteren Teil der Kammer 5 des Außenghäuses 2 mit einem Gießharz 84 dicht zu vergießen und die Einzeladern 82 bzw. die Schlauchleitung 81 darin dicht einzubetten. Dabei kann es günstig sein, das Gießharz 84 bis in den Bereich des Bundes 74 des Schalters 3 einzubringen, wobei das Gießharz 84 vorzugsweise durch die Kapillarkraft des schmalen Spaltes 77 zwischen der Abdichtfläche 75 und der Innenfläche 76 bis zur Höhe des Gegenanschlags 73 des Schalters 3 vordringen kann. Durch den definierten Spalt 77 und die sich anschließende räumliche Erweiterung wird erreicht, daß auch im Spaltbereich eine einwandfreie Gießharzabdichtung gegeben ist und durch die räumliche Erweiterung ein weiteres kapillarkraftbedingtes Vordringen des Gießharzes 84 unterbunden ist, so daß der sich über dem Bund 74 befindliche Teil der Kammer 5 in jedem Falle vergußfrei bleibt und somit immer eine sichere Funktion des Schalters 3 sichergestellt ist. Um eine optimale Verbindung des Gießharzes 84 mit den Seitenwänden 6 bis 9 des Außengehäuses 2 zu erzielen, kann es günstig sein, die Innenfläche 76 des Außengehäuses 2 mit einer Oberflächenrauhigkeit auszustatten.

Damit sichergestellt ist, daß beim Vergießen der Schalteinrichtung 1 keinerlei Gießharz 84 in das Innere des Schaltgehäuses 4 eindringen kann, kann letzteres zumindest an seinem unteren Teil, aus dem die Anschlußzungen 58 bis 61 herausgeführt sind, absolut dicht ausgebildet sein. Dazu können im Innern des Schaltgehäuses 4 Dichtlippen 85 angeformt sein, die am Umfang der Anschlußzungen 58 bis 61 zwei oder mehr Dichtlippen 85 auf Abstand hintereinander vorgesehen sein.

Das Schaltgehäuse 4 des Einfachschalters 3' kann einen Gehäusegrundkörper besitzen, dessen eine Breitseitenwandung unmittelbar angeformt sein kann, so daß der Gehäusegrundkörper im wesentlichen wannenförmig ist. Die andere Breitseitenwandung 62 des Schaltgehäuses 4 kann vor dem Zusammenbau als loser Gehäusedeckel gestaltet sein, der nach dem Einsetzen der einzelnen Schaltteile auf den Gehäusegrundkörper aufgesetzt und mit diesem dicht verbunden werden kann.

Der Doppelschalter 3" kann einen etwas breiteren Gehäusegrundkörper besitzen, dessen Breitseitenwandungen 62 von Gehäusedeckeln gebildet sein können, die beim Zusammenbau des Doppelschalters 3" dicht mit dem Gehäusegrundkörper verbunden werden können.

Der Schalter 4 kann über einen Betätigungsteil 108 geschaltet werden, der die Dachwand durchdringt und in dieser verschiebbar gelagert ist. Oben auf dem Betätigungsteil 108 kann ein Schaltdeckel 110 lösbar befestigt sein, der oben eine vorzugsweise als Nut ausgebildete Vertiefung 113 besitzt, in die ein Butzen des Betätigungsstößels 27 eingreifen kann.

## Patentansprüche

1. Schalteinrichtung mit einem eine offene Kammer bildenden Außengehäuse (2) und einem darin positionierbaren Schalter (3) mit einem von außen betätigbaren Betätigungsstößel (27) und einem Schaltgehäuse (4), das in einer Kammer (5) des Außengehäuses (2) mit einem Gießharz (84) dicht vergossen ist und an Seitenwandungen (62, 65) einen Bund (74) aufweist, wobei ein sich über dem Bund (74) befindlicher Teil der Kammer (5), in dem der Betätigungsstößel (27) vorgesehen ist, vergußfrei ist, dadurch gekennzeichnet, daß der Bund (74) eine Abdichtfläche (75) aufweist, daß der zwischen der Abdichtfläche (75) und den Innenflächen (76) des Außengehäuses (2) gebildete Spalt (77) mit dem Gießharz (84) ausgefüllt ist und daß im Bereich der Abdichtfläche (75) eine Rastverbindung (68) vorgesehen ist.

2. Schalteinrichtung nach vorstehendem Anspruch, dadurch gekennzeichnet, daß die Rastverbindung (68) aus mindestens einem in eine Rastausnehmung (69) eingreifenden Rastvorsprung (70) gebildet ist.

3. Schalteinrichtung nach einem oder mehreren der vorstehenden Ansprüche, dadurch gekennzeichnet, daß der Rastvorsprung (70) am Außengehäuse (2) und die Rastausnehmung (69) am Schaltgehäuse (4) vorgesehen ist.

4. Schalteinrichtung nach einem oder mehreren der vorstehenden Ansprüche, dadurch gekennzeichnet, daß der Rastvorsprung (70) an mindestens einer Breitseitenwand (6, 7) des Außengehäuses (2) und die Rastausnehmung (69) an mindestens einer Breitseitenwandung (62) des Schaltgehäuses (4) vorgesehen ist.

5. Schalteinrichtung nach einem oder mehreren der vorstehenden Ansprüche, dadurch gekennzeichnet, daß die Rastverbindung (68) in Montageeinschubrichtung gesehen mindestens eine Einführschräge (71) aufweist, die am Schaltgehäuse (4) vorgesehen ist.

6. Schalteinrichtung nach einem oder mehreren der vorstehenden Ansprüche, dadurch gekennzeichnet, daß ein Anschlag (72) durch an den Breit- und/oder Schmalseitenwänden (6 bis 9) des Außengehäuses (2) angeformte Versteifungsrippen (37) für einen Gegenanschlag (73) des Schaltgehäuses (4) gebildet ist.

7. Schalteinrichtung nach einem oder mehreren der vorstehenden Ansprüche, dadurch gekennzeichnet, daß das Außengehäuse (2) und das Schaltgehäuse (4) eine eine Fehlmontage verhindernde Zwangsführung aufweisen.

8. Schalteinrichtung nach vorstehendem Anspruch, dadurch gekennzeichnet, daß die Zwangsführung eine bevorzugt an einer Schmalseitenwand (8, 9) des Außengehäuses (2) ausgebildete Führungsnut und eine bevorzugt an einer Schmalseitenwandung (65) des Schaltgehäuses (4) angeformte Führungsnase (79) aufweist.

9. Schalteinrichtung nach einem der vorstehenden Ansprüche, dadurch gekennzeichnet, daß die Innenfläche (76) des Außengehäuses (2) eine oberflächenvergrößernde Rauheit aufweist.

10. Schalteinrichtung nach Anspruch 1, dadurch gekennzeichnet, daß der in einer Wand (10) des Außengehäuses (2) in einem Zylinder (28) axial verschiebbar gelagerte Betätigungsstößel (27) zwischen zwei Buchsen (16, 17) angeordnet ist.

11. Schalteinrichtung nach vorstehendem Anspruch, dadurch gekennzeichnet, daß in der Oberwand (10) des Außengehäuses (2) eine den Zylinder (28) umgebende Ringnut (32) ausgeformt ist.

12. Schalteinrichtung nach einem der Ansprüche 10 und 11, dadurch gekennzeichnet, daß der Betätigungsstößel (27), der Zylinder (28) und die Ringnut (32) von einer gummielastischen Schutzkappe (35) überdeckt sind.

13. Schalteinrichtung nach Anspruch 1, dadurch gekennzeichnet, daß an Anschlußzungen (58 bis 61) des Schalters (3) elektrische Leiter (80) einer Schlauchleitung (81). oder elektrische Einzeladern (82) kontaktierbar sind und das die Schlauchleitung (81) aufnehmende Außengehäuse (2''', 2'''') länger ist als das die Einzeladern (82) aufnehmende Außengehäuse (2', 2").

14. Schalteinrichtung nach einem der Ansprüche 1 bis 13, dadurch gekennzeichnet, daß das Außengehäuse (2) bevorzugt aus einem Kunststoff gebildet ist und weitgehend gleiche Wanddicken aufweist.

15. Schalteinrichtung nach Anspruch 1, dadurch gekennzeichnet, daß mindestens eine einer Schmalseitenwandung des Schaltgehäuses (4) naheliegende Anschlußzunge (58, 61) zur Bildung eines größeren Abstands zur nächstliegenden Schmalseitenwand (8, 9) des Außengehäuses (2) treppenstufenförmig abgekröpft ist.

16. Schalteinrichtung nach einem der Ansprüche 1 bis 15, dadurch gekennzeichnet, daß die Breite des Außengehäuses (2', 2‴), gemessen zwischen zwei Breitseitenwänden (6, 7), mit einem Einfachschalter (3') etwa 1,45 bis 1,65, vorzugsweise etwa 1,57 mal größer ist als der Einfachschalter (3').

17. Schalteinrichtung nach einem der Ansprüche 1 bis 16, dadurch gekennzeichnet, daß die Breite des Außengehäuses (2", 2"") , gemessen zwischen den beiden Breitseitenwänden (6, 7), mit einem Doppelschalter (3") etwa 1,2 bis 1,35, vorzugsweise etwa 1,29 mal größer ist als der Doppelschalter (3").

18. Schalteinrichtung nach einem der Ansprüche 1 bis 17, dadurch gekennzeichnet, daß die Breite des Außengehäuses (2", 2""), gemessen zwischen den beiden Breitseitenwänden (6, 7), mit einem Doppelschalter (3") etwa 1,3 bis 1,5, vorzugsweise etwa 1,41 mal breiter ist als das Außengehäuse (2', 2‴) für einen Einfachschalter (3').

19. Schalteinrichtung nach einem der Ansprüche 1 bis 18, dadurch gekennzeichnet, daß das Schaltgehäuse (4) an dem die Anschlußzungen (58 bis 61) aufweisenden Unterteil gegen ein Eindringen von Gießharz (84) dicht ausgebildet ist.

20. Schalteinrichtung nach Anspruch 19, dadurch gekennzeichnet, daß im Schaltgehäuse (4) an den Anschlußzungen (58 bis 61) anliegende Dichtlippen vorgesehen sind.

21. Schalteinrichtung nach Anspruch 1, dadurch gekennzeichnet, daß mindestens eine der Breitseitenwandungen (62) des Schaltgehäuses (4) als einen Gehäusegrundkörper verschließender Deckel ausgebildet ist.

## Claims

1. Switching device with an outer casing (2) forming an open chamber and a switch (3) able to be positioned therein, with an actuating plunger (27) able to be actuated from outside and a switch casing (4), which is hermetically cast in a chamber (5) of the outer casing (2) with a casting resin (84) and on side walls (62, 65) comprises a shoulder (74), in which case a part of the chamber (5) located above the shoulder (74), in which chamber the actuating plunger (27) is provided, is free from cast material, characterised in that the shoulder (74) has a sealing surface (75), that the gap (77) formed between the sealing surface (75) and the inner surfaces (76) of the outer casing (2) is filled with the casting resin (84) and that provided in the region of the sealing surface (75) is a locating connection (68).

2. Switching device according to the preceding Claim, characterised in that the locating connection (68) is formed from at least one locating projection (70) engaging in a locating recess (69).

3. Switching device according to one or more of the preceding Claims, characterised in that the locating projection (70) is provided on the outer casing (2) and the locating recess (69) is provided on the switch casing (4).

4. Switching device according to one or more of the preceding Claims, characterised in that the locating projection (70) is provided on at least one broad side wall (6, 7) of the outer casing (2) and the locating recess (69) is provided on at least one broad side wall (62) of the switch casing (4).

5. Switching device according to one or more of the preceding Claims, characterised in that seen in the assembly insertion direction, the locating connection (68) comprises at least one insertion bevel (71), which is provided on the switch casing (4).

6. Switching device according to one or more of the preceding Claims, characterised in that a stop (72) is formed by strengthening ribs (37) for a counter-stop (73) of the switch casing (4), which ribs are integrally formed on the broad and/or narrow side walls (6 to 9) of the outer casing (2).

7. Switching device according to one or more of the preceding Claims, characterised in that the outer casing (2) and the switch casing (4) have guide members preventing incorrect assembly.

8. Switching device according to the preceding Claim, characterised in that the guide members comprise a guide groove preferably constructed on one narrow side wall (8, 9) of the outer casing (2) and a guide lug (79) integrally formed preferably on one narrow side wall (65) of the switch casing (4).

9. Switching device according to one of the preceding Claims, characterised in that the inner surface (76) of the outer casing (2) is rough, thus increasing the surface.

10. Switching device according to Claim 1, characterised in that the actuating plunger (27) mounted to slide axially in a wall (10) of the outer casing (2) in a cylinder (28), is located between two bushes (16, 17).

11. Switching device according to the preceding Claim, characterised in that an annular groove (32) surrounding the cylinder (28) is formed in the upper wall (10) of the outer casing (2).

12. Switching device according to one of Claims 10 and 11, characterised in that the actuating plunger (27), the cylinder (28) and the annular groove (32) are covered by a resilient rubber protective cap (35).

13. Switching device according to Claim 1, characterised in that at connecting tongues (58 to 61) of the switch (3), contact can be made with electrical leads (80) of a conduit (81) or electrical individual wires (82) and the outer casing (2‴, 2'''') receiving the conduit (81) is longer than the outer casing (2', 2") receiving the individual wires (82).

14. Switching device according to one of Claims 1 to 13, characterised in that the outer casing (2) is preferably formed from a synthetic material and has largely identical wall thicknesses.

15. Switching device according to Claim 1, characterised in that at least one connection tongue (58, 61) lying close to one narrow side wall of the switch casing (4), is bent at an angle in the form of steps to form a greater distance from the nearest narrow side wall (8, 9) of the outer casing (2).

16. Switching device according to one of Claims 1 to 15, characterised in that the width of the outer casing (2', 2‴), measured between two broad side walls (6, 7), with a single switch (3') is approximately 1.45 to 1.65, preferably approximately 1.57 times greater than the single switch (3').

17. Switching device according to one of Claims 1 to 16, characterised in that the width of the outer casing (2", 2''''), measured between the two broad side walls (6, 7), with a double switch (3") is approximately 1.2 to 1.35, preferably approximately 1.29 times greater than the double switch (3").

18. Switching device according to one of Claims 1 to 17, characterised in that the width of the outer casing (2", 2''''), measured between the two broad side walls (6, 7), with a double switch (3") is approximately 1.3 to 1.5, preferably approximately 1.41 times wider than the outer casing (2', 2‴) for a single switch (3').

19. Switching device according to one of Claims 1 to 18, characterised in that at the lower part comprising the connection tongues (58 to 61), the switch casing (4) is constructed hermetically to prevent the penetration of casting resin (84).

20. Switching device according to Claim 19, characterised in that sealing lips bearing against the connecting tongues (58 to 61) are provided in the switch casing (4).

21. Switching device according to Claim 1, characterised in that at least one cover is provided which closes off the broad side walls (62) of the switch casing (4) as a base member of the casing.

## Revendications

1. Dispositif de commutation comportant :
- un boîtier externe (2) formant une chambre ouverte dans laquelle peut être positionné un commutateur (3) actionnable de l'extérieur par un poussoir (27) et dont le boîtier (4) est enrobé de manière étanche par une résine (84) coulée dans une chambre (5) du boîtier externe (2), les parois latérales (62, 65) du boîtier (4) portant un collet (74) au-dessus duquel la partie de la chambre (5) où se trouve le poussoir de manoeuvre (27) ne contient pas de résine (84),
caractérisé en ce que
le collet (74) présente une portée d'étanchéité (75) et que la fente (77) existant entre cette portée (75) et les portées internes (76) du boîtier externe (2) est remplie par la résine coulée (84), une liaison d'arrêt (68) étant prévue dans la zone de la portée d'étanchéité (75).

2. Dispositif selon la revendication 1,
caractérisé en ce que
la liaison d'arrêt (68) est constituée d'au moins une saillie d'arrêt (70) en prise dans un évidement d'arrêt (69).

3. Dispositif selon une ou plusieurs des revendications précédentes,
caractérisé en ce que
la saillie d'arrêt (70) est prévue sur le boîtier externe (2) tandis que l'évidement d'arrêt (69) est prévu sur le boîtier de commutateur (4).

4. Dispositif selon l'une des revendications précédentes,
caractérisé en ce que
la saillie d'arrêt (70) est prévue sur au moins une paroi latérale large (6, 7) du boîtier externe (2) tandis que l'évidement d'arrêt (69) est prévu sur au moins une paroi latérale large (62) du boîtier de commutateur (4).

5. Dispositif selon l'une des revendications précédentes,
caractérisé en ce que
la liaison d'arrêt (68), vue selon sa direction de coulissement au montage, présente au moins une pente d'engagement (71, prévue sur le boîtier du commutateur (4).

6. Dispositif selon l'une des revendications précédentes,
caractérisé en ce qu'
une butée (72) correspondant à une contrebutée (73) du boîtier de contacteur (4), est constituée par des nervures de raidissement (37) moulées sur les parois des côtés larges et/ou étroits (6 à 9) du boîtier externe (2).

7. Dispositif selon l'une des revendications précédentes,
caractérisé en ce que
le boîtier externe (2) et le boîtier de contacteur (4) présentent un guidage forcé empêchant toute erreur de montage.

8. Dispositif selon la revendication précédente,
caractérisé en ce que
le guidage forcé comporte une rainure de guidage prévue de préférence sur une paroi (8, 9) d'un côté étroit du boîtier externe (2) et une dent de guidage (79) prévue de préférence sur une paroi (65) d'un côté étroit du boîtier de commutateur (4).

9. Dispositif selon l'une des revendications précédentes,
caractérisé en ce que
la portée interne (76) du boîtier externe (2) présente une rugosité qui accroît son étendue superficielle.

10. Dispositif selon la revendication 1,
caractérisé en ce que
le poussoir de manoeuvre (27) monté coulissant axialement dans un cylindre (28) logé dans une paroi (10) du boîtier externe (2), est placé entre deux douilles (16, 17).

11. Dispositif selon la revendication précédente,
caractérisé en ce que
dans la paroi supérieure (10) du boîtier externe (2) est moulée une rainure annulaire (32) autour du cylindre (28).

12. Dispositif selon l'une des revendications 10 et 11,
caractérisé en ce que
le poussoir de manoeuvre (27), le cylindre (28) et la rainure annulaire (32) sont recouverts par un capot de protection (35) élastique comme du caoutchouc.

13. Dispositif selon la revendication 1,
caractérisé en ce que
les languettes de raccordement (58 à 61) du contacteur (3) peuvent être mises en contact avec des conducteurs électriques (80) d'un câble (81) ou avec des conducteurs individuels (82), le boîtier externe (2‴, 2"") recevant le câble étant plus grand que le boîtier externe (2', 2") recevant les conducteurs individuels (82).

14. Dispositif selon l'une des revendications 1 à 13,
caractérisé en ce que
le boîtier externe (2) est réalisé de préférence en matière plastique et présente des parois d'épaisseurs sensiblement égales.

15. Dispositif selon la revendication 1,
caractérisé en ce qu'
au moins une languette de raccordement (58, 61) située près de la paroi du côté étroit du boîtier de contacteur (4) est coudée en forme de marche d'escalier de manière à accroître sa distance par rapport à la paroi du côté étroit le plus proche appartenant au boîtier externe (2).

16. Dispositif selon l'une des revendications 1 à 15,
caractérisé en ce que
la largeur du boîtier externe (2", 2''''), mesurée entre les deux parois (6, 7) des côtés larges est, dans le cas d'un commutateur simple (3'), environ 1,45 à 1,65, de préférence environ 1,57 fois plus grande que celle du commutateur lui-même.

17. Dispositif selon l'une des revendications 1 à 16,
caractérisé en ce que
la largeur du boîtier externe (2", 2''''), mesurée entre les deux parois des côtés larges (6, 7) est, dans le cas d'un commutateur double (3"), environ 1,2 à 1,35, de préférence environ 1,29 fois plus grande que celle du commutateur double (3").

18. Dispositif selon les revendications 1 à 17,
caractérisé en ce que
la largeur du boîtier externe (2", 2''''), mesurée entre les deux parois des côtés larges (6, 7) est, dans le cas d'un commutateur double (3") environ 1,3 à 1,5, de préférence environ 1,41 fois plus grande que celle du boîtier externe (2', 2‴) d'un commutateur simple (3').

19. Dispositif selon l'une des revendications 1 à 18,
caractérisé en ce que
le boîtier de commutateur (4) est, le long de sa partie inférieure portant les languettes de raccordement (58 à 61) doté d'une étanchéité le mettant à l'abri de toute pénétration de résine coulée (84).

20. Dispositif selon la revendication 19,
caractérisé en ce que
dans le boîtier de commutateur (4), il est prévu des lèvres d'étanchéité appliquées sur les languettes de raccordement (58 à 61).

21. Dispositif selon la revendication 1,
caractérisé en ce qu'
au moins une des parois des côtés larges (62) du boîtier de commutateur (4) a la forme d'un couvercle obturant le corps principal du boîtier.
